# EUROPÄISCHE PATENTSCHRIFT

(11) **EP 1 473 446 B1**
(45) Veröffentlichungstag und Bekanntmachung des Hinweises auf die Patenterteilung: **31.08.2005**
(21) Anmeldenummer: 03028808.8
(22) Anmeldetag: 15.12.2003
(51) Int. Cl.: F01N 3/023, B01D 41/02

(54) **Verfahren und Vorrichtung zum Reinigen eines Partikelfilters**
Process and device for cleaning a particulate filter
Procédé et dispositif de purification d'un filtre à particules

(30) Priorität: 30.04.2003 DE 10319788
(43) Veröffentlichungstag der Anmeldung: 03.11.2004
(73) Patentinhaber: J. Eberspächer GmbH & Co., 73730 Esslingen (DE)
(72) Erfinder: Wirth, Georg, 73230 Kirchheim/Teck (DE); Zacke, Peter, Dr., 73095 Albershausen (DE); Felix Neumann, 73738 Esslingen (DE)
(74) Vertreter: Patentanwalts-Partnerschaft Rotermund + Pfusch + Bernhard

(56) Entgegenhaltungen:
- EP-A- 0 308 972
- DE-A- 4 134 949

## Beschreibung

Die vorliegende Erfindung betrifft ein Verfahren sowie eine Vorrichtung zum Reinigen eines Partikelfilters von unverbrennbaren Rückständen, das zum Filtern von Abgasen einer Brennkraftmaschine dient.

Vorrichtungen und Verfahren zum Rückspülen von Partikelfiltern sind beispielsweise aus der DE 41 34 949 Al sowie aus der EP 0 308 972 A2 bekannt.

Im Abgasstrang einer Brennkraftmaschine, insbesondere bei einem Dieselmotor, kann zur Reduktion der Schadstoffemissionen ein Partikelfilter, insbesondere ein Rußfilter, angeordnet sein. Im Betrieb der Brennkraftmaschine durchströmen die Abgase das Partikelfilter, das dabei in der Abgasströmung mitgeführte Partikel, insbesondere Rußpartikel, zurückbehält. Die Abgase werden dadurch gereinigt. Die Anwendung derartiger Partikelfilter ist bei Brennkraftmaschinen von Kraftfahrzeugen von besonderem Interesse.

Die aus den Abgasen heraus gefilterten Partikel lagern sich im Partikelfilter ab, wodurch allmählich der Durchströmungswiderstand des Partikelfilters und somit der Abgasgegendruck, gegen die Brennkraftmaschine arbeitet, ansteigen. Um ein Ansteigen des Abgasgegendrucks auf unerwünscht hohe Werte zu vermeiden, wird das Partikelfilter von Zeit zu Zeit regeneriert. Eine solche Regeneration wird üblicherweise dadurch erreicht, dass die im Partikelfilter abgelagerten Partikel in einem speziellen Regenerationsbetrieb abgebrannt werden. Zu diesem Zweck kann beispielsweise die Abgastemperatur erhöht und/oder die Zusammensetzung der Abgase variiert werden. Bekannt ist beispielsweise die Zugabe von chemischen Zusätzen, wie z.B. Eisen- oder Cer-Additiven in das Abgas. Durch den Abbrand der abgelagerten Partikel kann der Durchströmungswiderstand des Partikelfilters zumindest beinahe wieder auf den niedrigen Wert eines neuen Partikelfilters abgesenkt werden. Bei einer Verwendung des Partikelfilters im Abgasstrang der Brennkraftmaschine eines Kraftfahrzeugs wird beispielsweise nach einer Laufleistung von 300 bis 2.000 km eine derartige Regeneration durchgeführt.

Im Betrieb der Brennkraftmaschine gelangen jedoch auch unverbrennbare Partikel in das Partikelfilter und lagern sich darin ab. Beispielsweise kann es sich hierbei um unverbrennbare Reste von Schmieröl der Brennkraftmaschine, sogenannte Ölasche, um Motorabrieb und gegebenenfalls um unverbrennbare Reste der eingesetzten Kraftstoffadditive handeln. Diese unverbrennbaren Ablagerungen können naturgemäß bei der mit einem Abbrand der abgelagerten Partikel arbeitenden Regeneration nicht aus dem Partikelfilter entfernt werden. Dementsprechend kommt es bei einer langen Lebenszeit des Partikelfilters trotz ordnungsgemäßer Regenerationen zu einer Zunahme der unverbrennbaren Ablagerungen im Partikelfilter. Das Partikelfilter wird dadurch langsam verstopft, was wieder mit einem Gegendruckanstieg einhergeht. Der zunehmende Durchströmungswiderstand kann auch durch eine Verkürzung der Regenerationszyklen für den Partikelabbrand nicht reduziert werden. Insgesamt steigt somit der mittlere Gegendruck des Partikelfilters im Betrieb der Brennkraftmaschine immer mehr an. Die nutzbare Motorleistung sinkt, während der Kraftstoffverbrauch steigt.

Um das Partikelfilter von den nicht brennbaren Ablagerungen zu befreien, ist eine Reinigung des Partikelfilters erforderlich. Bei einer Verwendung des Partikelfilters in einem Kraftfahrzeug ist eine solche Reinigung des Partikelfilters beispielsweise nach einer Laufleistung von 100.000 bis 150.000 km, also während der Lebenszeit des Kraftfahrzeugs wenigstens einmal erforderlich.

Hier setzt die Erfindung an. Die vorliegende Erfindung beschäftigt sich mit dem Problem, einen vorteilhaften Weg zur Reinigung eines Partikelfilters aufzuzeigen.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Partikelfilter zu seiner Reinigung mit einem Spülgas zu spülen und dabei gleichzeitig mit einer rieselfähigen Schüttung zu befüllen. Die Spülgasströmung kann dabei die leicht heraus lösbaren Ablagerungen mitnehmen. Ein Großteil der Ablagerungen sitzt jedoch vergleichsweise fest in den Poren des Partikelfilters. Da die Spülgasströmung naturgemäß den Weg des geringsten Widerstands geht, werden die festsitzenden Ablagerungen über Umgehungswege, die sich im porösen Werkstoff des Partikelfilters ausbilden, umströmt. Mit Hilfe der Schüttgutbefüllung werden nun diese Umgehungswege allmählich verstopft, wodurch die Druckdifferenz und die Strömungsgeschwindigkeit an den festsitzenden Ablagerungen mehr und mehr zunehmen. Bei einem entsprechendem Gebläse können der Spülgasdruck und die Strömungsgeschwindigkeit soweit erhöht werden, dass durch die Verstopfung der Umgehungswege schließlich auch die festsitzenden Ablagerungen ausgespült werden können.

Entsprechend einer vorteilhaften Ausführungsform kann das Spülen des Partikelfilters als Rückspülung ausgestaltet sein, bei der die Spülgasströmungsrichtung der beim Filterbetrieb des Partikelfilters vorliegenden Abgasströmungsrichtung entgegengesetzt ist. Durch eine solche Rückspülung wird das Ablösen und das Heraustransportieren der Ablagerungen erheblich vereinfacht bzw. erst ermöglicht.

Die Verwendung einer Gasströmung hat gegenüber einer Flüssigkeitsströmung den Vorteil, dass die rückgespülten Partikel nicht mit einander verklumpen, was bei der Verwendung einer Flüssigkeit als Spülmedium der Fall sein kann. Durch eine solche Verklumpung wird die Abreinigung der Rückstände zusätzlich erschwert. Desweiteren wird die Reinigungsflüssigkeit durch den Reinigungsvorgang mit den Partikeln verunreinigt, was die Entsorgung der abgereinigten Partikel erschwert. Außerdem kommt es bei flüssigen Reinigungsmitteln rasch zu einem großen Druckanstieg, was bei einem Partikelfilter, dessen Filterkörper in einem Gehäuse mittels Lagermatten gehaltert ist, leicht zu einer Beschädigung des Partikelfilters, insbesondere zu einem verrutschen des Filterkörpers innerhalb des Gehäuses führen kann.

Grundsätzlich ist auch denkbar, einen großen pneumatischen Volumenstrom mittels eines entsprechend großen Gebläses zu erzeugen. Der energetische Aufwand zur Erzeugung eines derartigen großen Volumenstroms ist jedoch sehr hoch, so dass die Reinigung des Partikelfilters mit einem solchen Gebläse weder aus ökonomischer noch aus ökologischer Sicht sinnvoll ist. Darüber hinaus müssten auch die mit einem solchen Gebläse geförderten großen Volumenströme zuerst durch ein entsprechend großes, mit kleinem Durchströmungswiderstand arbeitendes Filter geführt werden, was den Aufwand zusätzlich vergrößert.

Im Unterschied dazu kann die vorliegende Erfindung mit einer Spülgasströmung arbeiten, die eine vergleichsweise kleinen Volumenstrom besitzt. Durch das gezielte Befüllen des Partikelfilters bei seiner Durchströmung mit dem Spülgas kann jedoch auch mit einem relativ kleinen Gebläse lokal bei den festsitzenden Ablagerungen der Differenzdruck auf einen hinreichend großen Wert erhöht werden, um die gewünschte Ablösung der Verunreinigungen zu erreichen. Das Zusetzen des durchströmbaren Querschnitts des Partikelfilters mit Hilfe der Schüttgutbefüllung führt im verbleibendem Querschnitt des Partikelfilters außerdem zu einer entsprechenden Erhöhung der Strömungsgeschwindigkeit, was den Abtransport herausgelöster Ablagerungen sowie das Ablösen der Ablagerungen selbst verbessert.

Das Partikelfilter wird im Filterbetrieb in einer Abgasströmungsrichtung vom einem Anströmende zu einem Abströmende durchströmt. Entsprechend einer vorteilhaften Ausführungsform kann das Partikelfilter beim Reinigungsbetrieb so befüllt werden, dass die Schüttung vom Anströmende zum Abströmende anwachst. Diese Ausführungsform nutzt die Erkenntnis, dass sich die nur schwer entfernbaren, festsitzenden Ablagerungen vorwiegend am Abströmende des Partikelfilters anlagern. Dies führt dazu, dass bereits eine relativ schwache Spülgasstromung ausreicht, die geringen bzw. weniger festsitzenden Ablagerung im Bereich des Anströmendes des Partikelfilters zu lösen und abzutransportieren. Dieser Sachverhalt wird bei der vorliegenden Weiterbildung ausgenutzt, indem das Partikelfilter beim Spülen zuerst am Anströmende mit der Schüttung befüllt wird, also in einem Abschnitt, der durch die Spülgasströmung bereits im wesentlichen vollständig abgereinigt ist. Durch die Schüttung wird im bereits gereinigten Abschnitt des Partikelfilters der durchströmbare Querschnitt reduziert, wodurch im verbleibenden Querschnitt des Partikelfilters die Strömungsgeschwindigkeit bzw. die Druckdifferenz ansteigt, was zu einer erhöhten Reinigungswirkung führt. Mit zunehmenden Abstand vom Anströmende sitzen die Ablagerungen immer fester im Partikelfilter. Da durch die vorgeschlagene Vorgehensweise die Schüttung vom Anströmende her anwachst, kann die Reinigungswirkung der Spülgasströmung jeweils an der richtigen Position und in dem. Maß gesteigert werden, wie die Ablagerungen zu ihrer Abreinigung eine intensivere Spülgasbeaufschlagung benötigen. Wenn das Partikelfilter bis in den Bereich seines Abströmendes mit Schüttgut befüllt ist, steht der gesamte verfügbare Differenzdruck an den "hartnäckigsten" Ablagerungen bzw. Verstopfungen an, so dass auch diese abgereinigt werden können.

Bei einer besonders vorteilhaften Ausführungsform kann das Schüttgut der Spülgasströmung stromauf des Partikelfilters beigemischt werden. Hierdurch ergibt sich von selbst die erwünschte rückseitige Verfüllung des Partikelfilters mit dem Schüttgut.

Für die Schüttung wird zweckmäßig ein rieselfähiges, insbesondere trockenes, Schüttgut verwendet, das im Hinblick auf Korngröße und Kornform so gestaltet ist, dass es nach dem Reinigungsvorgang einfach aus dem Partikelfilter ausgeleert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erlautert, wobei sich gleiche Bezugszeichen auf gleiche oder funktional gleiche oder ähnliche Bauteile beziehen.

Es zeigen, jeweils schematisch,
- Fig. 1: einen stark vereinfachten Längsschnitt durch ein Partikelfilter mit vergrößerten Details,
- Fig. 2: einen stark vereinfachten Längsschnitt durch ein Partikelfilter im Filterbetrieb unmittelbar vor einer Reinigung,
- Fig. 3 bis 6: Ansichten wie in Fig. 2, jedoch im Reinigungsbetrieb bei unterschiedlichem Reinigungsfortschritt,
- Fig. 7: eine Ansicht wie in Fig. 2 im Filterbetrieb, jedoch unmittelbar nach dem Reinigen.

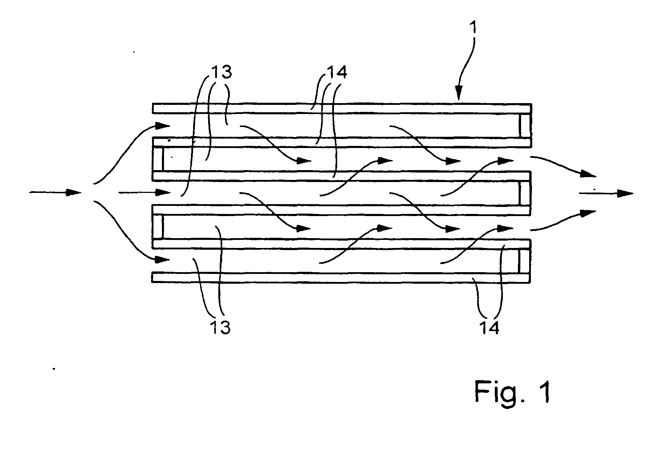

Entsprechend Fig. 1 besitzt ein Partikelfilter 1 eine von einer durch Pfeile symbolisierten Gasströmung durchströmbare Struktur, beispielsweise aus einer Waben-Keramik. Üblicherweise enthält das Partikelfilter 1 eine Vielzahl von parallelen Kanälen 13, die durch poröse Wände 14 voneinander getrennt sind. Die benachbarten Kanäle 13 sind abwechselnd anströmseitig bzw. abströmseitig geschlossen, so dass die zu filternde Gasströmung zwangsläufig die Wände 14 durchströmen muss, wobei sich mitgeführte Verunreinigungen in den Poren der Wände 14 ablagern können.

Das Partikelfilter 1 kommt im Abgasstrang einer Brennkraftmaschine, insbesondere in einem Kraftfahrzeug, zur Anwendung und dient dort zum Filtern von Abgasen der Brennkraftmaschine. In den Abgasen mitgeführte Partikel, insbesondere Rußpartikel eines Dieselmotors, werden dabei vom Partikelfilter 1, das auch als Rußfilter bezeichnet werden kann, aus der Abgasströmung herausgefiltert. Dabei setzen sich die Partikel im Partikelfilter 1 ab. Da die Mehrheit der Partikel brennbar ist, können die Partikel in einem Regenerationsbetrieb des Partikelfilters 1 von Zeit zu Zeit abgebrannt werden. Da die Partikel jedoch auch unverbrennbare Bestandteile aufweisen, kommt es mit der Zeit zu einer Zunahme der unverbrennbaren Ablagerungen im Partikelfilter 1. Hierdurch nimmt der Durchströmungswiderstand des Partikelfilters 1 zu, was für den Kraftstoffverbrauch der Brennkraftmaschine sowie für deren Leistungsfähigkeit nachteilig ist.

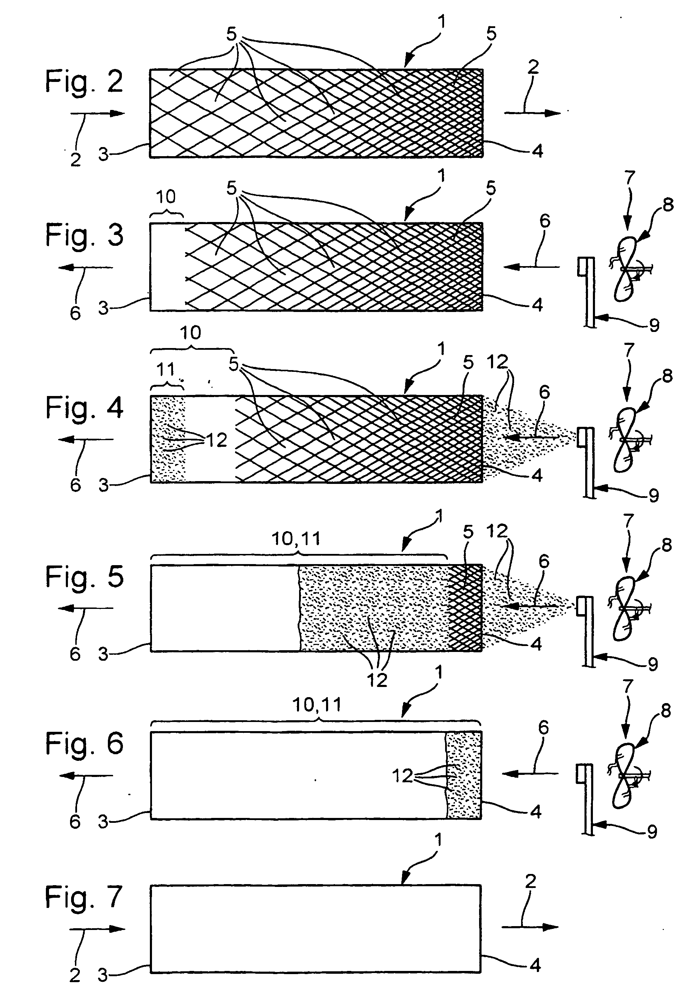

Fig. 2 zeigt das Partikelfilter 1 während seines Filterbetriebs, also wenn es im Abgasstrang der Brennkraftmaschine angeordnet ist. Im Filterbetrieb wird das Partikelfilter 1 von einer Abgasströmung 2 durchströmt, die bzw. deren Abgasströmungsrichtung in Fig. 2 durch Pfeile symbolisiert ist. Bezüglich dieser Abgasströmungsrichtung 2 besitzt das Partikelfilter 1 ein Anströmende 3 sowie ein Abströmende 4. Das Partikelfilter 1 wird dabei in seiner Längsrichtung durchströmt, wobei das Anströmende 3 und das Abströmende 4 die Längsenden 3, 4 des Partikelfilters 1 bilden.

Bei dem in Fig. 2 gezeigten Zustand ist das Partikelfilter 1 bereits so stark mit unverbrennbaren Rückständen 5 beladen, dass der Durchströmungswiderstand des Partikelfilters 1 einen maximal zulässigen Wert erreicht hat. Dementsprechend ist nun eine Reinigung des Partikelfilters 1 von den unverbrennbaren Ablagerungen 5 erforderlich. Bemerkenswert ist für diesen Beladungszustand des Partikelfilters 1, dass die Beladungsdichte in der Abgasströmungsrichtung 2 zunimmt. Das bedeutet, dass in der Nähe des Abströmendes 4 die Beladung des Partikelfilters 1 am stärksten ist, während sie im Bereich des Anströmendes 3 am niedrigsten ist. Es hat sich gezeigt, dass die Beladungsdichte mit der Festigkeit einhergeht, mit welcher sich die Ablagerungen 5 im Partikelfilter 1 angesetzt haben. Das bedeutet, je größer die Beladungsdichte, desto größer sind die Druckdifferenz und die Strömungsgeschwindigkeit einer für die Abreinigung erforderlichen Spülgasströmung 6 (vgl. die Fig. 3 bis 6), die zum Ablösen und zum Abtransportieren der Ablagerungen 5 benötigten wird. In Fig. 2 ist die Ablagerungsdichte durch eine vom Anströmende 3 zum Abströmende 4 zunehmende Liniendichte der Schraffur symbolisiert, wobei klar ist, dass die Ablagerungsdichte im wesentlichen kontinuierlich vom Anströmende 3 zum Abströmende 4 zunehmen kann.

Zum Reinigen des Partikelfilters 1 wird dieses in eine Reinigungsvorrichtung 7 eingesetzt, von der hier lediglich ein Gebläse 8 und eine Zugabeeinrichtung 9 dargestellt sind. Das Gebläse 8 erzeugt die Spülgasströmung 6, die bzw. deren Spülgasströmungsrichtung in den Fig. 3 bis 6 durch Pfeile symbolisiert ist. Bevorzugt wird dabei eine Ausführungsform, bei welcher die Spülung als Rückspülung ausgestaltet ist, so dass die Spülgasströmungsrichtung 6 der Abgasströmungsrichtung 2 entgegensetzt orientiert ist. Das Partikelfilter 1 wird demnach vom Abströmende 4 zum Anströmende 3 mit der Spülgasströmung 6 rückgespült.

Wie aus Fig. 3 entnehmbar ist, können mit Hilfe der Spülgasströmung 6 die am leichtesten abzureinigenden Verunreinigung bereits durch die Wirkung der Spülgasströmung 6 gelöst und aus dem Partikelfilter 1 heraus transportiert werden. Dementsprechend ist in Fig. 3 das Partikelfilter 1 im Bereich seines Anströmendes 3 bereits von den Ablagerungen 5 gereinigt. Für die verbleibenden Ablagerungen 5 ist die im Zustand der Fig. 3 herrschenden Spülgasströmung 6 zu schwach im Hinblick auf Strömungsgeschwindigkeit und Druckdifferenz. Dabei ist klar, dass in allen Bereichen des Partikelfilters 1 leicht entfernbare Ablagerungen 5 enthalten sein können, die durch die Spülgasströmung 6 abtransportierbar sind.

Ein bereits von den Ablagerungen 5 gereinigter Bereich 10 ist in Fig. 3 durch eine geschweifte Klammer gekennzeichnet und erstreckt sich in der Längsrichtung des Partikelfilters 1 vom Anströmende 3 in Richtung Abströmende 4.

Entsprechend Fig. 4 wird beim erfindungsgemäßen Reinigungsverfahren das Partikelfilter 1 beim Spülen mit einer Schüttung 11 befüllt. Zu diesem Zweck gibt die Zugabeeinrichtung 9 stromauf des Partikelfilters 1 ein geeignetes Schüttgut 12 in die Spülgasströmung 6 zu. Die Zugabeeinrichtung 9 ist dabei so ausgestaltet, dass sich für das Schüttgut 12 innerhalb der Spülgasströmung 6 eine möglichst gleichmäßige Verteilung ergibt, was beispielsweise durch eine entsprechende Verwirbelung beim Eintrag des Schüttguts 12 in die Spülgasströmung 6 erreicht werden kann.

Die von der Spülgasströmung 6 mitgeführte Schüttung 11 lagert sich im Partikelfilter 1 ab und führt so zu einer erwünschten Verstopfung des Partikelfilters 1. Die Befüllung wird dabei gezielt so durchgeführt, dass die Schüttung 11 von einem Partikelfilterlängsende 3 zum anderen Partikelfilterlängsende 4 in der Längsrichtung des Partikelfilters 1 allmählich anwächst. Bei der hier gezeigten, bevorzugten Ausführungsform wird das Partikelfilter 1 im Reinigungsbetrieb so befüllt, dass sich das Schüttgut 12 zunächst am Anströmende 3 ablagert, so dass die Schüttung 11 vom Anströmende 3 in Richtung Abströmende 4 anwächst. Hierdurch wird gewährleistet, dass sich die Schüttung 11 im Partikelfilter 1 gezielt dort anreichert, wo das Partikelfilter 1 bereits von den Ablagerungen 5 abgereinigt ist.

Mit Hilfe der Schüttung 11 wird im Partikelfilter 1 lokal der Durchströmungswiderstand erhöht, wodurch sich im verbleibenden Partikelfilter 1 die an den Ablagerungen 5 anstehende Druckdifferenz vergrößert, wobei gleichzeitig die Strömungsgeschwindigkeit der Spülgasströmung 6 zunimmt. Die Schüttung 11 bewirkt somit eine Erhöhung der Reinigungswirkung der Spülgasströmung 6, so dass mit zunehmender Befüllung des Partikelfilters 1 zunehmend hartnäckigere Ablagerungen 5 von der Spülgasströmung 6 gelöst und abtransportiert werden können. Wie aus Fig. 4 entnehmbar ist, wächst somit der abgereinigte Bereich 10 vom Anströmende 3 in Richtung Abströmende 4 an, so dass nach und nach auch Bereiche mit höhere Ablagerungsdichte gereinigt werden.

Fig. 5 zeigt einen Abreinigungszustand, bei dem das Partikelfilter 1 beinahe vollständig mit Schüttgut 12 befüllt ist. Lediglich in der Nähe des Abströmendes 4 sind noch besonders festsitzende Ablagerungen 5 vorhanden. In diesem, das Abströmende 4 umfassenden Bereich des Partikelfilters 1 herrscht durch die nahezu vollständige Befüllung des Partikelfilters 1 mit der Schüttung 11 eine maximale Druckdifferenz an den Ablagerungen 5, die mit einer maximalen Strömungsgeschwindigkeit der Spülgasströmung 6 einhergeht. Hierdurch können auch die besonders festsitzenden Ablagerungen 5 gelöst und von der Spülgasströmung 6 mitgerissen werden.

Das Gebläse 8 ist dabei so ausgelegt, dass es die erforderliche Druckdifferenz erzeugen kann. Hierbei ist zu beachten, dass ein Maximalwert für eine zwischen Anströmende 3 und Abströmende 4 herrschende Druckdifferenz nicht überschritten werden darf, wenn das Partikelfilter 1 in einem Gehäuse gelagert ist und diese Lagerung ab einer vorgegebenen maximalen Druckdifferenz nachgibt.

Schließlich herrscht der in Fig. 6 gezeigte Zustand, bei dem das Partikelfilter 1 vollständig mit der Schüttung 11 befüllt ist. Die Zugabe von Schüttgut 12 durch die Zugabeeinrichtung 9 kann dann beendet werden. Es ist klar, dass es nicht in jedem Fall erforderlich ist, das Partikelfilter 1 vollständig mit dem Schüttgut 12 zu befüllen. Vielmehr kann es je nach Festigkeit der Ablagerungen 5 ausreichend sein, nur einen bestimmten Längsabschnitt des Partikelfilters 1 mit der Schüttung 11 zu befüllen.

Nach der Reinigung des Partikelfilters 1 mittels rückspülender Spülgasströmung 6 und rückseitiger Verfüllung mit Schüttgut 12 wird das Schüttgut 12 aus dem Partikelfilter 1 wieder ausgeleert. Damit dies möglich ist, wird ein Schüttgut 12 verwendet, dass eine erhöhte Rieselfähigkeit besitzt und sich aufgrund Formgebung und Dimensionierung nicht selbst im Partikelfilter 1 festsetzt. Beispielsweise besitzt das Schüttgut 12 eine mittlere Korngröße, die größer ist, als eine mittlere Porengröße der porösen Kanalwände des Partikelfilters 1. Die mittlere Korngröße des Schüttguts 12 kann beispielsweise zwischen 0,01 mm und 0,2 mm liegen. Bevorzugt wird ein Schüttgut 12 mit einem kugelförmigen Korn. Besonders vorteilhaft ist ein Schüttgut 12 aus Glaskügelchen. Ebenso können jedoch auch andere, geeignete Materialien als Schüttgut 12 verwendet werden.

In Fig. 7 ist das nunmehr vollständig gereinigte und vom Schüttgut 12 entleerte Partikelfilter 1 wieder im Filterbetrieb, d.h. das Partikelfilter 1 ist im Abgasstrang der Brennkraftmaschine angeordnet und wird von der Abgasströmung 2 durchströmt.

## Patentansprüche

1. Verfahren zum Reinigen eines Partikelfilters (1) von unverbrennbaren Rückständen (5), das zum Filtern von Abgasen einer Brennkraftmaschine dient, bei dem das Partikelfilter (1) mit einer Spülgasströmung (6) gespült und beim Spülen mit einer rieselfähigen Schüttung (11) befüllt wird.

2. Verfahren nach Anspruch 1,
**dadurch gekennzeichnet,**
**dass** die Spülung als Rückspülung ausgestaltet ist, bei der eine Spülgasströmungsrichtung (6) einer beim Filterbetrieb des Partikelfilters (1) vorliegenden Abgasströmungsrichtung (2) entgegengesetzt ist.

3. Verfahren nach Anspruch 1 oder 2,
**dadurch gekennzeichnet,**
**dass** das Partikelfilter (1) in seiner Längsrichtung mit Spülgas durchströmt und so befüllt wird, dass die Schüttung (11) von einem Partikelfilterlängsende (3) zum anderen Partikelfilterlängsende (4) anwächst.

4. Verfahren nach einem der Ansprüche 1 bis 3,
**dadurch gekennzeichnet,**
- **dass** das Partikelfilter (1) im Filterbetrieb in einer Abgasströmungsrichtung (2) von einem Anströmende (3) zu einem Abströmende (4) durchströmt wird,
- **dass** das Partikelfilter (1) beim Reinigungsbetrieb so befüllt wird, dass die Schüttung (11) vom Anströmende (3) zum Abströmende (4) anwächst.

5. Verfahren nach einem der Ansprüche 1 bis 4,
**dadurch gekennzeichnet,**
**dass** das Schüttgut (12) der Spülgasströmung (6) bezüglich deren Strömungsrichtung stromauf des Partikelfilters (1) beigemischt wird.

6. Verfahren nach einem der Ansprüche 1 bis 5,
**dadurch gekennzeichnet,**
- **dass** das Partikelfilter (1) eine Vielzahl paralleler und wechselweise anströmseitig und abströmseitig verschlossener Kanäle aufweist, die durch poröse Wände voneinander getrennt sind,
- **dass** das Schüttgut (12) eine mittlere Korngröße aufweist, die größer ist als eine mittlere Porengröße der Kanalwände.

7. Verfahren nach einem der Ansprüche 1 bis 6,
**dadurch gekennzeichnet,**
**dass** das Schüttgut (12) eine mittlere Korngröße von etwa 0,01 mm bis 0,2 mm aufweist.

8. Verfahren nach einem der Ansprüche 1 bis 7,
**dadurch gekennzeichnet,**
**dass** das Schüttgut (12) ein kugelförmiges Korn aufweist.

9. Verfahren nach einem der Ansprüche 1 bis 8,
**dadurch gekennzeichnet,**
**dass** ein Schüttgut (12) aus Glaskügelchen verwendet wird.

10. Verfahren nach einem der Ansprüche 1 bis 9,
**dadurch gekennzeichnet,**
**dass** nach dem Reinigen des Partikelfilters (1) die Schüttung (11) wieder aus dem Partikelfilter (1) ausgeleert wird.

11. Verfahren nach einem der Ansprüche 1 bis 10,
**dadurch gekennzeichnet,**
**dass** das Befüllen des Partikelfilters (1) mit dem Schüttgut (12) zeitlich versetzt nach Beginn der Spülung mit der Spülgasströmung (6) beginnt.

12. Vorrichtung zum Reinigen eines Partikelfilters (1) von unverbrennbaren Rückständen (15), das zum Filtern von Abgasen einer Brennkraftmaschine dient,
- mit einem Gebläse (8) zur Erzeugung einer Spülgasströmung (6) zum Spülen des Partikelfilters (1) und
- mit einer Zugabeeinrichtung (9) zum Zugeben von Schüttgut (12) in die Spülgasströmung (6) bezüglich deren Strömungsrichtung stromauf des Partikelfilters (1).

## Claims

1. A method for cleaning a particulate filter (1) to remove non-combustible residues (5), said filter serving to filter the exhaust gas from an internal combustion engine, wherein the particulate filter (1) is purged with a purging gas stream (6) and filled with a free-flowing bulk packing (11) during this purging period.

2. The method according to Claim 1,
**characterized in that**
the purging is designed as a backwashing in which the direction of a purging gas stream (6) is opposite the direction (2) of the exhaust gas flow during filter operation of the particulate filter (1).

3. The method according to Claim 1 or 2,
**characterized in that**
the particulate filter (1) has purging gas flowing through it in a longitudinal direction and is filled in such a way that the packing (11) increases from one longitudinal end (3) of the particulate filter to the other longitudinal end (4) of the particulate filter.

4. The method according to any one of Claims 1 through 3, **characterized in that**
- during filter operation, exhaust gas flows through the particulate filter (1) has a gas in a direction of flow (2) of the exhaust gas stream from an oncoming flow end (3) to an outgoing flow end (4),
- the particulate filter (1) is filled during cleaning operation in such a way that the packing (11) increases from the oncoming flow end (3) to the outgoing flow end (4).

5. The method according to any one of Claims 1 through, 4,
**characterized in that**
the bulk material (12) is admixed to the purging gas stream (6) upstream from the particulate filter (1) with respect to its direction of flow.

6. The method according to any one of Claims 1 through 5, **characterized in that**
- the particulate filter (1) has a plurality of parallel channels which are alternately closed at the inlet and at the outlet end and are separated by porous walls,
- the bulk material (12) has an average particle size which is larger than an average pore size of the channel walls.

7. The method according to any one of Claims 1 through 6,
**characterized in that**
the bulk material (12) has an average particle size of approx. 0.01 mm to 0.2 mm.

8. The method according to any one of Claims 1 through 7,
**characterized in that** the bulk material (12) has a spherical grain.

9. The method according to any one of Claims 1 through 8,
**characterized in that** a bulk material (12) comprised of glass beads is used.

10. The method according to any one of Claims 1 through 9,
**characterized in that** after cleaning the particulate filter (1), the packing (11) is again removed from the particulate filter (1).

11. The method according to any one of Claims 1 through 10,
**characterized in that** the filling of the particulate filter (1) with the bulk packing (12) takes place with a time lag after the start of the purging with the purging gas stream (6).

12. A device for cleaning a particulate filter (1) to remove non-combustible residues (15), said filter serving to filter exhaust gases of an internal combustion engine,
- having a fan (8) for producing a purging gas stream (6) for purging the particulate filter (1) and
- having a feed mechanism for feeding bulk material (12) into the purging gas stream (6) upstream from the particulate filter (1) with respect to its direction of flow (9).

## Revendications

1. Procédé de nettoyage d'un filtre à particules (1) de résidus incombustibles (5), qui sert à filtrer des gaz d'échappement d'un moteur à combustion interne, dans lequel le filtre à particules (1) est lavé par un écoulement de gaz de lavage (6) et est rempli lors du lavage d'un lit (11) fluide.

2. Procédé suivant la revendication 1, **caractérisé en ce que** le lavage est configuré sous forme de lavage à contre-courant, dans lequel une direction d'écoulement du gaz de lavage (6) est de sens contraire à une direction d'écoulement des gaz d'échappement présente en mode filtration du filtre à particules (1).

3. Procédé suivant l'une des revendications 1 et 2, **caractérisé en ce que** le filtre à particules (1) est balayé par le gaz de lavage dans sa direction longitudinale et est rempli de sorte que le lit (11) s'accroît d'une extrémité longitudinale (3) en direction de l'autre extrémité longitudinale (4) du filtre à particules.

4. Procédé suivant l'une des revendications 1 à 3, **caractérisé en ce que**
- le filtre à particules (1) est balayé en mode filtration dans une direction d'écoulement des gaz d'échappement (2) d'une extrémité afflux (3) en direction d'une extrémité sortie (4),
- le filtre à particules (1) est rempli en mode nettoyage de sorte que le lit (11) s'accroît de l'extrémité afflux (3) en direction de l'extrémité sortie (4).

5. Procédé suivant l'une des revendications 1 à 4, **caractérisé en ce que** le produit en vrac (12) est ajouté à l'écoulement de gaz de lavage (6), par rapport à la direction d'écoulement de ce dernier, en amont du filtre à particules (1).

6. Procédé suivant l'une des revendications 1 à 5, **caractérisé en ce que**
- le filtre à particules (1) présente une multiplicité de conduits parallèles et fermés en alternance côté afflux et côté sortie, séparés les uns des autres par des parois poreuses,
- le produit en vrac (12) présente une grosseur de grains moyenne supérieure à la grosseur de pores moyenne des parois de conduits.

7. Procédé suivant l'une des revendications 1 à 6, **caractérisé en ce que** le produit en vrac (12) présente une grosseur de grains moyenne d'environ 0,01 mm à 0,2 mm.

8. Procédé suivant l'une des revendications 1 à 7, **caractérisé en ce que** le produit en vrac (12) présente un grain sphérique.

9. Procédé suivant l'une des revendications 1 à 8, **caractérisé en ce qu'**un produit en vrac (12) de petites billes de verre est utilisé.

10. Procédé suivant l'une des revendications 1 à 9, **caractérisé en ce que** le lit (11) est de nouveau vidé du filtre à particules (1) après le nettoyage du filtre (1).

11. Procédé suivant l'une des revendications 1 à 10, **caractérisé en ce que** le remplissage du filtre à particules (1) par le produit en vrac (12) commence en déport dans le temps après le début du lavage par l'écoulement de gaz de lavage (6).

12. Dispositif de nettoyage d'un filtre à particules (1) de résidus incombustibles (5), qui sert à filtrer des gaz d'échappement d'un moteur à combustion interne, comprenant
- une soufflante (8) pour produire un écoulement de gaz de lavage (6) pour le lavage du filtre à particules (1) et
- un dispositif d'addition (9) pour l'ajout de produit en vrac (12) dans l'écoulement de gaz de lavage (6) par rapport à la direction d'écoulement de ce dernier en amont du filtre à particules (1).
